(19) Europäisches Patentamt / European Patent Office / Office européen des brevets

(11) **EP 3 493 000 B1**

(12) **EUROPÄISCHE PATENTSCHRIFT**

(45) Veröffentlichungstag und Bekanntmachung des Hinweises auf die Patenterteilung:
**14.06.2023 Patentblatt 2023/24**

(21) Anmeldenummer: **17205168.2**

(22) Anmeldetag: **04.12.2017**

(51) Internationale Patentklassifikation (IPC):
**G05B 9/03** (2006.01)   **G05B 19/05** (2006.01)
**G05B 19/042** (2006.01)   **G05B 23/02** (2006.01)
**G01D 9/00** (2006.01)

(52) Gemeinsame Patentklassifikation (CPC):
**G01D 9/005; G05B 9/03; G05B 19/0428; G05B 19/058; G05B 23/0237;** G05B 2219/1187; G05B 2219/24184; G05B 2219/24196

(54) **VERFAHREN ZUM FEHLERSICHEREN ERFASSEN EINES MESSWERTES UND AUTOMATISIERUNGSSYSTEM**

METHOD FOR THE ERROR-PROTECTED DETECTION OF A MEASURED VALUE AND AUTOMATION SYSTEM

PROCÉDÉ DE DÉTECTION DE MANIÈRE PROTÉGÉE CONTRE LES ERREURS D'UNE VALEUR MESURÉE ET SYSTÈME D'AUTOMATISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.06.2019 Patentblatt 2019/23**

(73) Patentinhaber: **Siemens Aktiengesellschaft 80333 München (DE)**

(72) Erfinder:
• **Kahabka, Thomas 91217 Hersbruck (DE)**
• **Müller, Johannes 90429 Nürnberg (DE)**

(74) Vertreter: **Siemens Patent Attorneys Postfach 22 16 34 80506 München (DE)**

(56) Entgegenhaltungen:
WO-A1-2005/109132   DE-A1-102005 005 995
DE-A1-102006 032 727   DE-C1- 10 235 502
US-A1- 2013 197 849

• **FREDERICKSON A A ED - PIEPER JEFF: "FAULT TOLERANT PROGRAMMABLE FOR SAFETY SYSTEMS", ISA TRANSACTIONS, INSTRUMENT SOCIETY OF AMERICA. PITTSBURGH, US, Bd. 29, Nr. 2, 1. Januar 1990 (1990-01-01) , Seiten 13-16, XP000114560, ISSN: 0019-0578, DOI: 10.1016/0019-0578(90)90059-T**

**Beschreibung**

Die Erfindung betrifft ein Verfahren zum fehlersicheren Erfassen eines Messwertes in einer Steuereinheit, wobei der Messwert zum einen mit einem ersten Erfassungsmittel und zum anderen mit einem zweiten Erfassungsmittel erfasst wird und dadurch ein erster Messwert und ein zweiter Messwert zur Verfügung gestellt wird, wobei in einem Vergleichsschritt in einem in der Steuereinheit ablaufenden Sicherheitsprogramm der erste und der zweite Messwert miteinander auf eine Abweichung voneinander verglichen werden und bei Erreichen oder Überschreitung einer vorgegebenen maximalen Abweichung ein Fehler erkannt wird. Die WO 2005/109132 A1 offenbart ein solches Verfahren.

In der DE 102 35 502 C1 ist eine Vorrichtung und ein Verfahren zur sicheren Schalterstellungserkennung eines Drehschalters offenbart.

Die US 2013/197849 A1 offenbart ein System um unregelmäßige Sensorsignale zu detektieren.

In der industriellen Automatisierungstechnik müssen zur Überwachung sicherheitsrelevanter Prozesswerte (z.B. Druck, Geschwindigkeit) diese Werte von funktional sicheren Systemen eingelesen und verarbeitet werden. Eine funktionale Sicherheit wird im Umfeld des Maschinenbaus durch Einhaltung der Normen ISO 13849-1 und -2 sowie der IEC 62061 sichergestellt.

Im Sinne der Erfindung wird unter funktionaler Sicherheit, die Definition nach der Norm EN/IEC 61511: "Funktionale Sicherheit - Sicherheitstechnische Systeme für die Prozessindustrie" und EN/IEC 61508: "Funktionale sicherheitsbezogene elektrischer/elektronischer/programmierbarer elektronischer Systeme" verstanden.

Für das Automatisierungssystem S7 300, Dezentrales Peripheriegerät ET 200M, existieren von der Firma Siemens fehlersichere Signalbaugruppen. Derartige Baugruppen erfüllen in der Regel die Anforderungen und Kriterien der IEC 61131, Teil 2. Auch liegen für derartige Baugruppen Zulassungen für CSA, UL und FM vor. In der Regel sind die Baugruppen, beispielsweise durch den TÜV, für den Einsatz im Sicherheitsbetrieb bis Sicherheitsklasse SIL3 (Safety Integrity Level) nach IEC 61508: 2000 oder nach dem Performance Level (PL) E und Kategorie 4 nach ISO 13849-1: 2006 bzw. EN ISO 138491: 2008, zertifiziert.

Demnach gibt es für die Lösung mit den ET 200M Baugruppen eine zertifizierte Hardwarelösung, allerdings handelt es sich bei diesen Baugruppen um Baugruppen mit einer relativ großen Bauform. Die nicht in allen Maschinen verbaut werden kann. Eine Lösung für ein kleineres System, beispielsweise die Baugruppen der ET 200S Reihe existiert nicht.

Für eine Erfassung von beispielsweise sicheren Analogwerten, insbesondere eine Stromerfassung von 4 bis 20 mA, auf der Basis der Siemens SIMATIC Baugruppen ET200S oder ET200SP gibt es bisher keine Lösung. Zwar können mit diesen Baugruppen selbstverständlich nicht-sichere Analogwerte eingelesen werden, aber eine Zertifizierung bzw. eine Freigabe für das Einlesen von sicheren Werten liegt nicht vor.

Aufgabe der Erfindung ist es, dem gegenüber eine Lösung für das fehlersichere Erfassen der Messwerte mit Standardbaugruppen (ET200S oder ET200SP), insbesondere mit nicht auf funktionale Fehlersicherheit ausgelegte Baugruppen, zu ermöglichen.

Bei dem eingangs genannten Verfahren zum fehlersicheren Erfassen eines Messwertes wird die Aufgabe durch die Merkmale des Anspruchs 1 gelöst.

Im Sinne der Erfindung ist unter Sicherheitsprogramm zu verstehen, eine Software bzw. ein industrielles Steuerungsprogramm, welches im fehlersicheren Teil einer Steuereinheit (CPU) Analogwerte überwacht. Mit Hilfe der oben genannten diversitär eingestellten Parametrierung ist es möglich, verschiedene in einer FMEA aufgeführten Fehlermodelle zu erkennen. Bei einem Systementwurf der Hardware wird das System einer intensiven Fehlermöglichkeit- und Einflussanalyse (FMEA) unterzogen. Dabei wird das System und seine Komponenten, u.a. definierter Fehlermodelle nach DIN 61784-3 untersucht (z.B. Verfälschung, unbeabsichtigte Wiederholung, falsche Abfolge etc.).

Durch das erste und das zweite Erfassungsmittel, wobei die Erfassungsmittel beispielsweise als Analogeingabebaugruppen ausgestaltet sind, ist es möglich, ein redundantes Erfassen von beispielsweise zwei Analogwerten zu ermöglichen und diese dem Sicherheitsprogramm (F-Programm) zuzuführen und auf Gleichheit zu prüfen. Es können dadurch verschiedene Fehlermodelle, welche in der FMEA beschrieben sind, aufgedeckt und beherrscht werden. Laufen die beiden Werte beispielsweise zu weit auseinander oder unterscheiden sie sich gar komplett, wird eine entsprechende Fehleraktion eingeleitet.

Mit Vorteil ist es nun bei dieser unterschiedlichen Parametrierung möglich, dass über den ersten Wert eine Erwartungshaltung an den zweiten Wert im Sicherheitsprogramm gestellt werden kann.

Bei dem Verfahren werden in den Erfassungsmitteln Analog-Digital-Wandler eingesetzt, wobei der Analog-Digital-Wandler in dem ersten Erfassungsmittel für den ersten Messwert einen ersten Integerwert und der Analog-Digital-Wandler in dem zweiten Erfassungsmittel für den zweiten Messwert einen zweiten Integerwert bereitstellt, auf welche die Plausibilitätskontrolle angewendet wird.

Die Erfassungsmittel sind derart ausgestaltet, dass sie einen Strom im Bereich von 0 bis 20 mA bzw. im Bereich von 4 bis 20mA erfassen können, so ist es vorteilhaft, wenn bei einer Messung eines Stromes von beispielsweise 4 mA mit dem ersten Erfassungsmittel ein Integerwert von Null erzeugt wird und aufgrund dessen, das im Sicherheitsprogramm bekannt ist, wie sich das zweite Erfassungsmittel bei 4 mA nun verhalten muss, kann eine Erwartungshaltung an den zweiten Messwert gestellt werden. Der zweite Messwert muss sich demnach in einem Bereich von ca. 5530 als Integerwert befinden, ansonsten liegt ein Fehler vor, der von einem Kreuzvergleich aufgedeckt wird.

In einer Ausgestaltungsvariante wird in dem Sicherheitsprogramm, also in dem auf funktionale Sicherheit ausgelegten Automatisierungsprogramm, der Steuereinheit die Plausibilitätskontrolle in einem ersten Funktionsbaustein und das Umparametrieren des zweiten Erfassungsmittels in einem zweiten Funktionsbaustein durchgeführt, dabei werden dem ersten Funktionsbaustein als Eingangswerte der erste und zweite Messwert übergeben und als Ausgangswerte wird zum einen der fehlersichere Messwert bereitgestellt und zum anderen wird das Startsignal für das Umparametrieren bereitgestellt, wobei das Startsignal dem zweiten Funktionsbaustein als Eingangswert bereitgestellt wird, welcher daraufhin das Umparametrieren veranlasst und nach erfolgreicher Umparametrierung der zweite Funktionsbaustein ein Rückmeldesignal bereitstellt, welches wiederum als Eingangswert auf den ersten Funktionsbaustein geschaltet wird.

Zusammenfassend kann für die Verfahrensschritte gesagt werden, dass ein Ablauf zur Absicherung der Analogwerte folgendermaßen durchgeführt wird.

1. Einlesen der beiden Analogwerte (Redundanz), wobei die Analogwerte zwangsläufig nicht gleich sind, da eine Baugruppe beispielsweise im Bereich von 4 bis 20 mA und die andere Baugruppe im Bereich von 0 bis 20 mA parametriert ist.

2. Plausibilisierung der beiden Analogwerte im Sicherheitsprogramm durch verschiedene Maßnahmen (Kreuzvergleich, Timeout, etc.).

3. Ausgänge des ersten Funktionsbausteins schreiben: a) Ausgabe eines sicheren Analogwertes oder b) Ausgabe eines Ersatzwertes, Diagnosewortes oder eines Errorbits.

4. Ein Startflag (Startsignal) zum Triggern des Umparametriervorganges setzen.

5. Erneuter Beginn bei 1. Sobald die Umparametrierung erfolgreich abgeschlossen ist.

Die Sicherheitsfunktion wird hier durch verschiedene im Sicherheitsprogramm realisierte Maßnahmen und implementierten Verfahren aufrechterhalten. Auf die einzelnen Maßnahmen wird später eingegangen.

Eine von den verschiedenen Maßnahmen ist es, z.B. wenn im ersten Funktionsbaustein zusätzlich überwacht wird, ob sich zumindest ein Messwert in einem vorgegebenen Zeitfenster ändert, falls keine Änderung erfolgt, wird ebenfalls ein Fehler erkannt. Bei dieser Maßnahme im Sicherheitsprogramm handelt es sich um eine Überwachung auf einen sogenannten "Stuck-At Fehler" oder auch auf einen eingefrorenen Zustand. Dabei speichert das Sicherheitsprogramm in jedem Zyklus den aktuellen Wert der Analogwerte ab und vergleicht diesem mit dem nächsten Zyklus, mit dem dort aktuellen Wert. Das gleiche wird für den zweiten Analogwert durchgeführt. Bei Gleichheit des Analogwertes innerhalb von zwei Zyklen wird ein Timer gestartet. Innerhalb dieser Zeit ("Freeze Time") müssen sich die alten Werte von den aktuellen Werten unterscheiden. Ist dies nicht der Fall, wird die entsprechende Fehleraktion eingeleitet.

Bei den Vergleichen der Werte wird selbstverständlich ein Vergleich mit den normierten Werten je nach Parametrierung durchgeführt.

Die eingangs genannte Aufgabe wird ebenso durch ein Automatisierungssystem nach Anspruch 4 gelöst. Das Automatisierungssystem ist ausgestaltet, zum fehlersicheren Erfassen eines Messwertes. Im Sinne der Erfindung und im Bezug auf den fehlersicheren Messwert und das fehlersichere Erfassen wird hier wiederum auf die in der Norm festgelegte funktionale Sicherheit verwiesen. Das erfindungsgemäße Automatisierungssystem ist ausgestaltet, zum fehlersicheren Erfassen eines Messwertes und umfasst eine Steuereinheit, ein erstes Erfassungsmittel ausgestaltet einen ersten Messwert zu erfassen, ein zweites Erfassungsmittel ausgestaltet einen zweiten Messwert zu erfassen, ein in der Steuereinheit ablaufendes Sicherheitsprogramm, welches ausgestaltet ist, den ersten und den zweiten Messwert miteinander auf ein Abweichung voneinander zu vergleichen und bei Erreichen oder Überschreitung einer vorgegebenen maximalen Abweichung einen Fehler zu erkennen, wobei das erste Erfassungsmittel für einen ersten einzustellenden Messbereich eingestellt ist und das zweite Erfassungsmittel mit Hilfe des Sicherheitsprogramms in einen zweiten einzustellenden Messbereich wechselweise umparametrierbar ist, wobei das Sicherheitsprogramm damit Kenntnis über den derzeit eingestellten zweiten Messbereich hat, weiterhin ist das Sicherheitsprogramm ausgestaltet eine Plausibilitätskontrolle zwischen dem ersten Messwert und dem zweiten Messwert durchzuführen, wobei das Sicherheitsprogramm ausgestaltet ist mit Hilfe der Kenntnis des zu erwartenden Wertebereichs in dem der zweite Messwert liegen muss, die Plausibilitätskontrolle durchzuführen, weiterhin ausgestaltet bei einem negativen Plausibilitätskontrollergebnis ebenfalls einen Fehler zu signalisieren. Bei einem Automatisierungssystem zum fehlersicheren Erfassen eines Messwertes handelt es sich um ein Automatisierungssystem, welches auf eine funktionale Sicherheit ausgelegt ist. Auch bei dem Sicherheitsprogramm handelt es sich um ein Sicherheitsprogramm, welches ausgestaltet ist um die funktionale Sicherheit zu erfüllen.

Bei dem erfindungsgemäßen Automatisierungssystem wird davon ausgegangen, dass für die Steuereinheit eine auf funktionale Sicherheit ausgelegte Steuereinheit benutzt wird und für die Erfassung der Messwerte mit dem Erfassungsmittel werden Standardbaugruppen verwendet, nämlich Baugruppen welche nicht auf funktionale Sicherheit ausgelegt sind und nicht eine entsprechende Zertifizierung haben.

Die Erfassungsmittel in dem Automatisierungssystem weisen einen Analog-Digital-Wandler auf und der Analog-Digital-Wandler in dem ersten Erfassungsmittel ist ausgestaltet für den ersten Messbereich einen ersten Integerwert und der Analog-Digital-Wandler in dem zweiten Erfassungsmittel ist ausgestaltet für den zweiten Messbereich einen zweiten Integerwert bereitzustellen und das Sicherheitsprogramm ist dazu ausgestaltet, die Plausibilitätskontrolle anhand der Integerwerte durchzuführen.

Das Sicherheitsprogramm, insbesondere das auf funktionale Sicherheit ausgelegte Sicherheitsprogramm der Steuereinheit, weist vorteilhafter Weise einen ersten Funktionsbaustein auf, welcher ausgestaltet ist, die Plausibilitätskontrolle durchzuführen und einen zweiten Funktionsbaustein, welcher ausgestaltet ist, das Umparametrieren des zweiten Erfassungsmittels durchzuführen.

Die Steuereinheit ist als eine auf funktionale Sicherheit ausgelegte industrielle Automatisierungssteuerung und das erste Erfassungsmittel und das zweite Erfassungsmittel ist jeweils als eine industrielle Analog-Baugruppe ausgestaltet. Zu bemerken ist, dass mithilfe der Erfindung es erst möglich wird, mit Standardbaugruppen einen Messwert nach den Kriterien der funktionalen Sicherheit zu erfassen.

Die Sicherheit wird weiterhin erfüllt, wenn zusätzlich eine auf funktionale Sicherheit ausgelegte industrielle Baugruppe an einen Rückwandbus angeschlossen ist, an dem auch die industriellen Analog-Baugruppen angeschaltet sind, wobei dadurch eine Überwachung des Rückwandbusses realisiert ist, wobei die auf funktionale Sicherheit ausgelegte industrielle Baugruppe ausgestaltet ist, ein Qualitätssignal zu generieren, welche Rückschlüsse zu Fehlern am Rückwandbus zulässt.

Die Zeichnung zeigt ein Ausführungsbeispiel. Dabei zeigt

FIG 1    einen Hardwareaufbau des Automatisierungssystems,

FIG 2    ein Konzept der verwendeten Funktionsbausteine, beispielsweise in einem Engineeringsystem,

FIG 3    einen ersten Funktionsbaustein mit Eingängen und Ausgängen,

FIG 4    einen zweiten Funktionsbaustein mit Ein- und Ausgängen,

FIG 5    ein Diagramm für bereitgestellten Integerwerten bei unterschiedlicher Parametrierung.

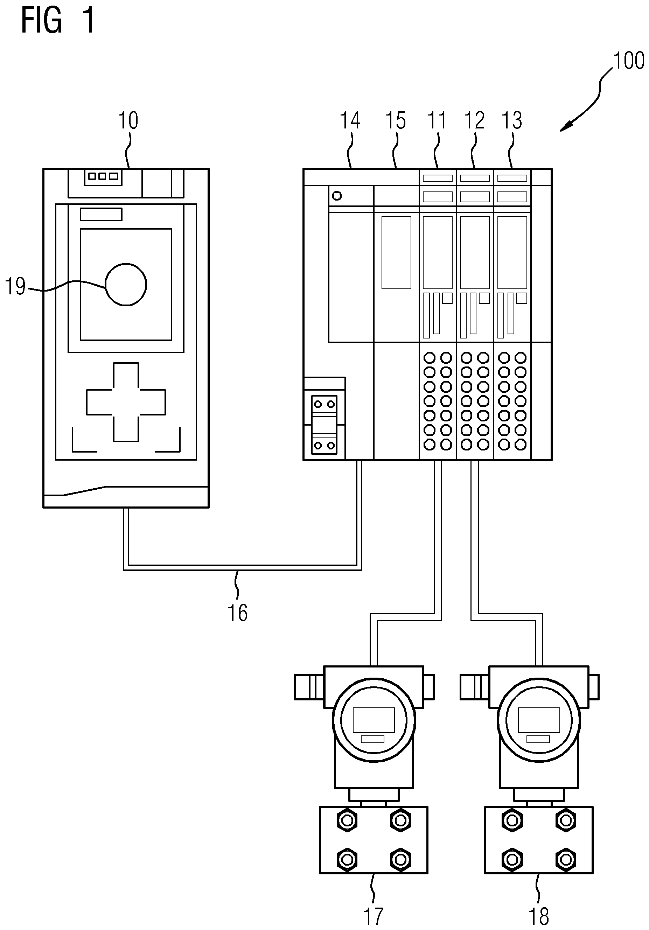

Gemäß FIG 1 ist ein Automatisierungssystem 100 mit einer Steuereinheit (F-CPU) und einer dezentral angeordneten Baugruppenanordnung, welche ein erstes Erfassungsmittel 11 (Standardbaugruppe), ein zweites Erfassungsmittel 12 (Standardbaugruppe), eine zusätzliche auf funktionale Sicherheit ausgelegte industrielle Baugruppe 13 (F-Baugruppe), ein Interfacemodul 14 und ein Servermodul 15 umfasst.

Zur redundanten Erfassung eines Messwertes ist das erste Erfassungsmittel 11 an einen ersten Messwertgeber 17 angeschlossen und das zweite Erfassungsmittel 12 ist an einen zweiten Messwertgeber 18 angeschlossen. Die beiden Messwertgeber 17,18 erfassen jeweils dieselbe physikalische Prozessgröße. Das dezentrale Baugruppenperipheriesystem mit den Baugruppen 11,12,13,14,15 ist mechanisch in einem Rückwandbussystem angeordnet.

Die Steuereinheit 10 ist über einen Feldbus 16, beispielsweise mit PROFI-Safe Technologie, damit dieser Feldbus 16 auch auf funktionale Sicherheit ausgelegt ist, mit dem Interfacemodul 14 verbunden.

In der Steuereinheit 10 läuft ein Sicherheitsprogramm 19 ab.

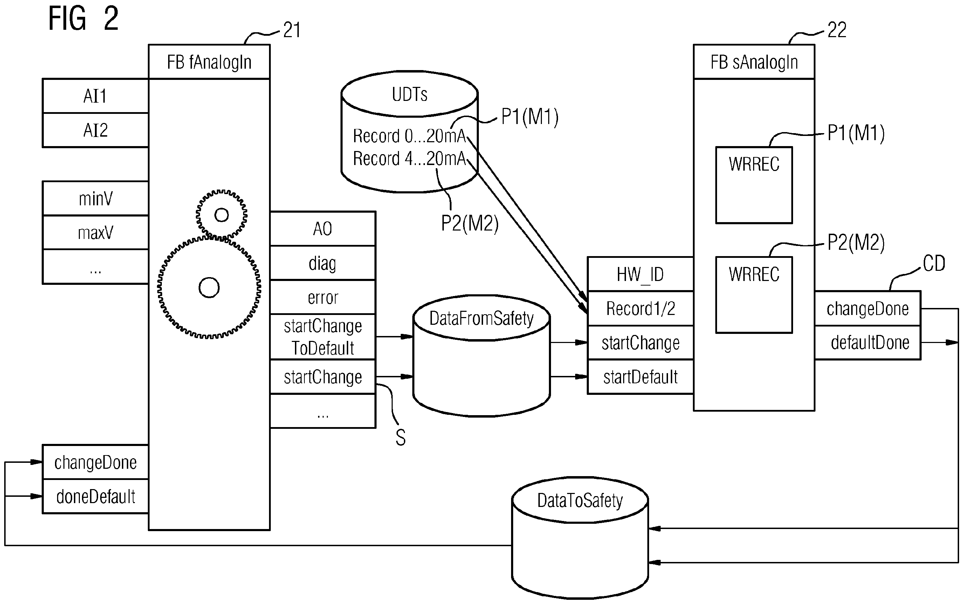

Mit der FIG 2 sind das Konzept und die Zusammenschaltung des ersten Funktionsbausteins 21 und des zweiten Funktionsbausteins 22 dargestellt. Die Funktionsbausteine 21,22 laufen in dem Sicherheitsprogramm 19 der Steuereinheit 10 ab. Der erste Funktionsbaustein 21 ist ausgestaltet, die Plausibilitätskontrolle durchzuführen. Der zweite Funktionsbaustein 22 ist ausgestaltet ein Umparametrieren des zweiten Erfassungsmittels 12 durchzuführen. Verfahrensgemäß sind die Funktionsbausteine 21,22 demnach ausgestaltet mit Hilfe des Sicherheitsprogramms einen Messbereich M2 für das zweite Erfassungsmittel 12 wechselweise umzuparametrieren, dabei wird im Sicherheitsprogramm 19 aufgrund der Kenntnis, wie das zweite Erfassungsmittel 12 gerade parametriert ist, und damit der derzeit eingestellte zweite Messbereich M2 bekannt ist, und demnach bekannt ist, in welchem Bereich der zweite Messwert AI2 liegen muss, eine Plausibilitätskontrolle zwischen dem ersten Messwert AI1 und dem zweiten Messwert AI2 durchgeführt. Dazu weist der erste Funktionsbaustein 21 auf seiner Eingangsseite einen Eingang "analogin1" für den ersten Messwert AI1 und einen Eingang "analogin2" für den zweiten Messwert AI2 auf. Als Ausgangswert stellt der erste Funktionsbaustein 21 einen fehlersicheren Messwert A0 "analogOut" bereit. Die Plausibilitätskontrolle wird demnach in dem ersten Funktionsbaustein 21 und das Umparametrieren des zweiten Erfassungsmittels 12 wird mit dem zweiten Funktionsbaustein 22 durchgeführt. Dem ersten Funktionsbaustein 21 werden als Eingangswerte der erste und der zweite Messwert AI1,AI2 übergeben und als Ausgangswert stellt der zweite Funktionsbaustein 21 den fehlersicheren Messwert A0 bereit. Der zweite Funktionsbaustein 21 generiert zusätzlich ein Startsignal S für das Umparametrieren. Das Startsignal S wird als Eingangssignal an den zweiten Funktionsbaustein 22 geführt, welcher daraufhin das Umparametrieren veranlasst und nach erfolgreicher Umparametrierung stellt der zweite Funktionsbaustein 22 ein Rückmeldesignal CD bereit. Das Rückmeldesignal CD wird wiederum als Eingang an den ersten Funktionsbaustein 21 "changeDone" geführt.

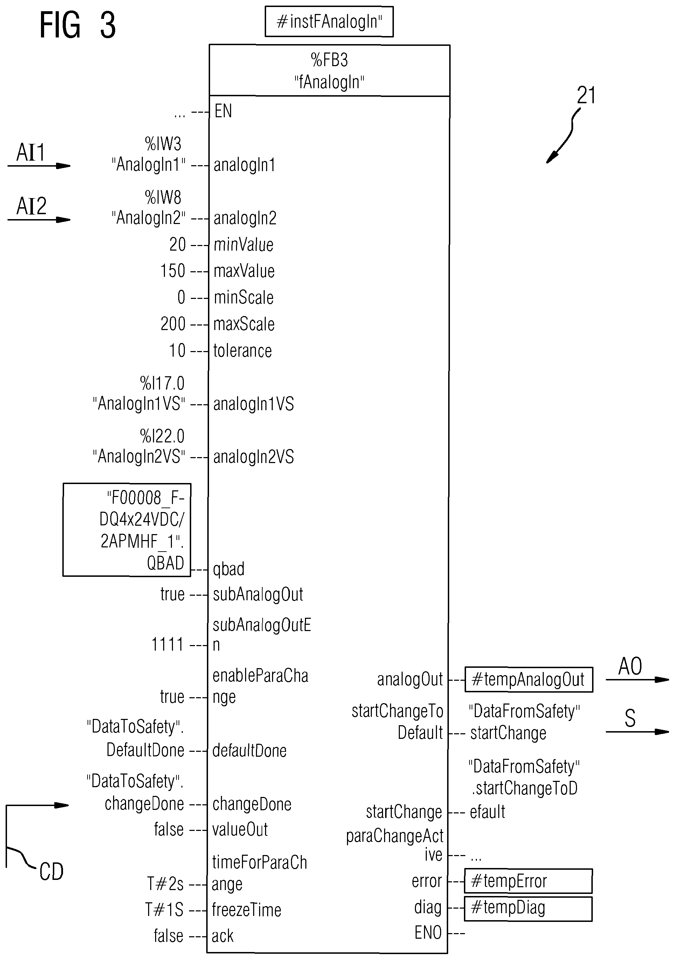

Mit der FIG 3 ist der erste Funktionsbaustein 21 im Detail mit all seinen Ein- und Ausgängen dargestellt. Im Wesentlichen wird der erste Messwert AI1 und der zweite Messwert AI2 an die entsprechenden Eingänge "Analog in 1" und Analog in 2" geführt. Der erste Funktionsbaustein 21 stellt einen sicheren Messwert A0 "Analog out" bereit.

Nachfolgend werden alle Parameter des zweiten Funktionsbausteins beschrieben:

| Parameter | Datentyp | In / Out | Erläuterung |
|---|---|---|---|
| analogIn1 | INT | IN | Analogwert S-AI1 (Wert mit fester 0-20 mA Parametrierung)<br>*Defaultwert: 0* |
| analogIn2 | INT | IN | Analogwert S-AI2 (Wert mit wechselnder Parametrierung 0-20 mA und 4-20 mA)<br>*Defaultwert: 0* |
| tolerance | DINT | IN | Hier kann die maximal zulässige Toleranz zwischen den beiden Analogwerten eingegeben werden. Diese sollte auf Grund von Messungenauigkeiten und Rundungen nicht zu gering gewählt werden.<br>Die Toleranz wird in der Dimension der gemessenen Dimension des Prozesswertes angegeben.<br>*Defaultwert: 10* |
| minValue | DINT | IN | Hier kann vom Anwender der untere Grenzwert des Prozesswertes eingegeben werden.<br>Die Einheit des Minimalwerts entspricht der des Prozesswertes<br>*Defaultwert: 20* |
| maxValue | DINT | IN | Hier kann vom Anwender der obere Grenzwert des Prozesswertes eingegeben werden.<br>Die Einheit des Maximalwertes entspricht der des Prozesswertes<br>*Defaultwert: 150* |

| | | | |
|---|---|---|---|
| minScale | DINT | IN | Unterer Grenzwert auf den die Messgröße skaliert werden muss.<br>Wird die Messung beispielhaft für einen Messbereich von 0...300°C durchgeführt, muss hier eine "0" eingetragen werden<br>*Defaultwert: 0* |
| maxScale | DINT | IN | Oberer Grenzwert auf den die Messgröße skaliert werden muss.<br>Wird die Messung beispielhaft für einen Messbereich von 0... 300°C durchgeführt, muss hier eine "300" eingetragen werden<br>*Defaultwert: 200* |
| analogIn1VS | BOOL | IN | Wertstatus des ersten Standard- Analogmoduls. Der Wertstatus ist lediglich eine Zusatzinformation und nicht zwingend für die Sicherheit der Analogwerte erforderlich. Jedoch liefert dieser eine einfache Zusatzdiagnose.<br>*Defaultwert: false* |
| analogIn2VS | BOOL | IN | Siehe AI1VS → Wertstatus Analogmodul 2<br>*Defaultwert: false* |

(fortgesetzt)

| qbad | BOOL | IN | Verschaltung des QBAD Signals eines F-Moduls, das auf derselben ET 200SP Station gesteckt sein muss wie die beiden Analogmodule. Das F-Modul muss nach den beiden Analogmodulen gesteckt sein. *Defaultwert: true* |
|---|---|---|---|
| subAnalogOutEn | BOOL | IN | Angabe ob im Fehlerfall Ersatzwerte oder ungültige Werte ausgegeben werden<br>0: Ungültige Werte ausgegeben<br>1: Die bei *subAnalogOut* angegeben Ersatzwerte werden ausgegeben<br>*Defaultwert: false* |
| subAnalogOut | DINT | IN | Ersatzwert, welcher im Fehlerfall und bei aktivierten *subAnalogOutEn* ausgegeben wird.<br>*Defaultwert: 0* |
| valueOut | BOOL | IN | Angabe ob der größere oder der kleinere Analogwert am Ausgang "Out" zur Verfügung steht. Bei Gleichheit der beiden Prozesswerte wird jeweils AI1 bereitgestellt.<br>0: Es wird der kleinere Prozesswert bereitgestellt.<br>1: Es wird der größere Prozesswert bereitgestellt.<br>*Defaultwert: false* |
| freezeTime | TIME | IN | Zeit für den Freeze Watchdog. Je nach parametrierter Zeit, darf einer oder beide Analogwerte unverändert bleiben.<br>Ändern sich die Werte nicht im angegeben Zeitfenster wird ein Error Bit gesetzt *Defaultwert: 1s* |
| ack | BOOL | IN | Quittiereingang:<br>Um nach einem Fehler den Wiederanlauf des Bausteins anzustoßen ist eine manuelle Quittierung notwendig.<br>*Defaultwert: false* |
| enableParaChange | BOOL | IN | Bei der Verwendung von mehreren FB "fAnalogIn" muss darauf geachtet werden, dass jeweils nur ein Baustein gerade im Umparametrier-vorgang ist. Eine fehlerhafte Adressierung wird sonst nicht sicher aufgedeckt.<br>Mit dem Eingang kann der Vorgang kurzeitig überbrückt werden.<br>*Defaultwert: true* |

| changeDone | BOOL | IN | Information aus dem Standard-Anwenderprogramm, ob der Parameterdatensatz für die Umparametrierung auf einen Messbereich von 0...20 mA geschrieben wurde.<br>*Defaultwert: false* |
|---|---|---|---|
| defaultDone | BOOL | IN | Information aus dem Standard-Anwenderprogramm, ob der Parameterdatensatz für die Umparametrierung auf einen Messbereich von 4...20 mA geschrieben wurde<br>*Defaultwert: false* |
| timeForParaChange | TIME | IN | Erlaubte Zeit für den Parameterwechsel .<br>*Defaultwert: 2s* |
| analogOut | DINT | OUT | Im fehlerfreien Fall liegt hier der plausibilisierte Analogwert an.<br>Im Fehlerfall liegt entweder ein ungültiger Analogwert (gekennzeichnet durch error = true) oder ein Ersatzwert an<br>*Defaultwert: 0* |
| diag | WORD | OUT | Diagnoseausgang. |

(fortgesetzt)

| | | | | |
|---|---|---|---|---|
| | | | | Das Diagnosewort setzt sich aus verschiedenen Error Bits zusammen und gibt detailliertere Informationen über die Fehlerursache. Die Zusammensetzung des Diagnoseworts wird in Kapitel 2.5 erläutert. *Defaultwert: 16#0000* |
| **error** | BOOL | OUT | | Globales Errorbit. Wird gesetzt sobald intern ein Fehler auftritt *Defaultwert: true* |
| **startChange-ToDefault** | BOOL | OUT | | Startflag für den Beginn der Umparametrierung auf Defaultwerte. Das Bit muss an das Standard-Anwenderprogramm übergeben werden und startet eine WRREC-Anforderung *Defaultwert: false* |
| **startChange** | BOOL | OUT | | Startflag für den Beginn der Umparametrierung. Das Bit muss ebenfalls über einen Koppel DB an das Standard-Anwenderprogramm übergeben werden, um dort die WRREC Anforderung zu triggern *Defaultwert: false* |
| **paraChangeActive** | BOOL | OUT | | Bei der Verwendung mehrerer FB "fAnalogIn" muss ein entsprechendes Handling erstellt werden, das garantiert, dass jeweils nur eine Umparametrierung stattfindet. Das Bit zeigt an ob in dem gewählten Baustein gerade ein Umparametrierzyklus stattfindet oder nicht *Defaultwert: false* |
| **EN** | BOOL | IN | | Darf nicht beschaltet werden - Systembedingter Eingang im Sicherheitsprogramm ohne Funktion |
| **ENO** | BOOL | OUT | | Darf nicht beschaltet werden - Systembedingter Ausgang im Sicherheitsprogramm ohne Funktion |

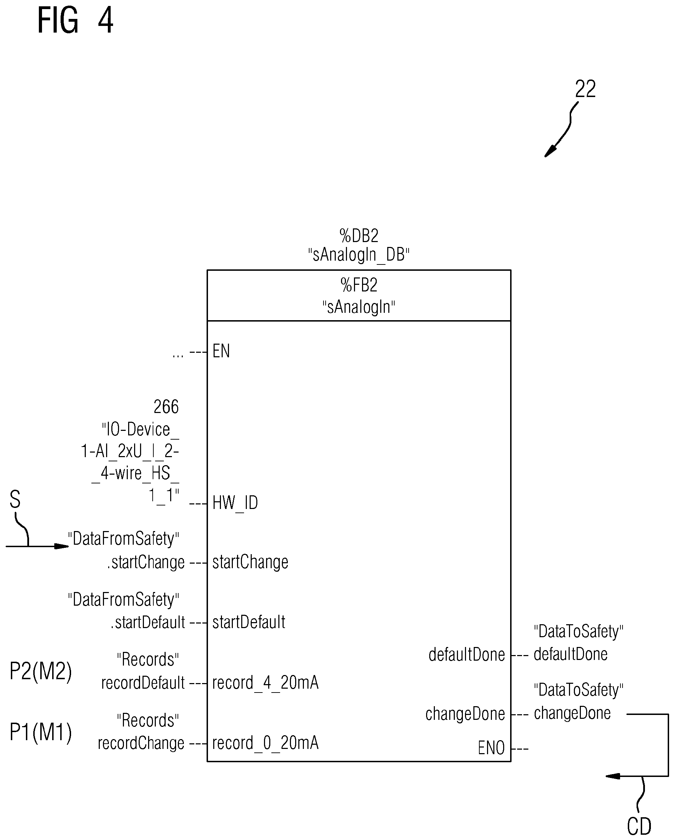

Die FIG 4 zeigt den zweiten Funktionsbaustein 22, welcher das Umparametrieren des zweiten Erfassungsmittels 12 durchführt. Für einen ersten Parametersatz P1 und einen zweiten Parametersatz P2, siehe auch FIG 2, wobei der erste Parametersatz P1 (M1) als ein Daten-Record 0...20 mA vorliegt und der zweite Parametersatz P2 (M2) als ein Daten-Record 4...20 mA vorliegt. Diese beiden Parametersätze P1,P2 werden von dem zweiten Funktionsbaustein 22 als Eingangsgrößen zum Umparametrieren des zweiten Erfassungsmittels 12 genutzt.

Das Startsignal S funktioniert als ein Trigger für den zweiten Funktionsbaustein 22. Jedes Mal wenn das Signal S anliegt, wird mit Hilfe des zweiten Funktionsbausteins 22 der jeweils gültige Parametersatz in dem zweiten Erfassungsmittel 12 auf den anderen wechselseitig umparametriert. Bei erfolgreicher Umparametrierung generiert der zweite Funktionsbaustein 22 ein Rückmeldesignal CD ("changeDone") welches zum ersten Funktionsbaustein 21 zurückgeführt wird. Mit dem Rückmeldesignal CD wird nun dem ersten Funktionsbaustein 21 für seine Plausibilitätsprüfung bestätigt, dass das zweite Erfassungsmittel die nun vorliegende gültige Parametrierung aufweist.

Nachfolgend werden alle Parameter des zweiten Funktionsbausteins erläutert.

| Parameter | Datentyp | In / Out | Erläuterung |
|---|---|---|---|
| **HW_ID** | HW_ANY | IN | Geben Sie hier die Hardware ID des Moduls an, die für die Umparametrierung vorgesehen ist. Im vorliegenden Fall die S-AI2. |
| **startChange** | BOOL | IN | Startbit aus dem Sicherheitsprogramm. Leitet den Vorgang des Umparametrierens ein. |
| **startDefault** | BOOL | IN | Startbit aus dem Sicherheitsprogramm. Leitet den Vorgang des Zurückparametrierens zum Ursprungszustand ein. |
| **record 4 20mA** | typeRecord ... | InOut | Default-Datensatz |
| **record 0 20mA** | typeRecord ... | InOut | Umparametrierungs-Datensatz |
| defaultDone | BOOL | OUT | Bit an das Sicherheitsprogramm. Signalisiert den Abschluss des Zurückparametrierens. |

(fortgesetzt)

| Parameter | Datentyp | In / Out | Erläuterung |
|---|---|---|---|
| changeDone | BOOL | OUT | Bit an das Sicherheitsprogramm. Signalisiert den Abschluss des Umparametrierens. |
| **EN/ENO** | | | Darf nicht verschaltet werden |

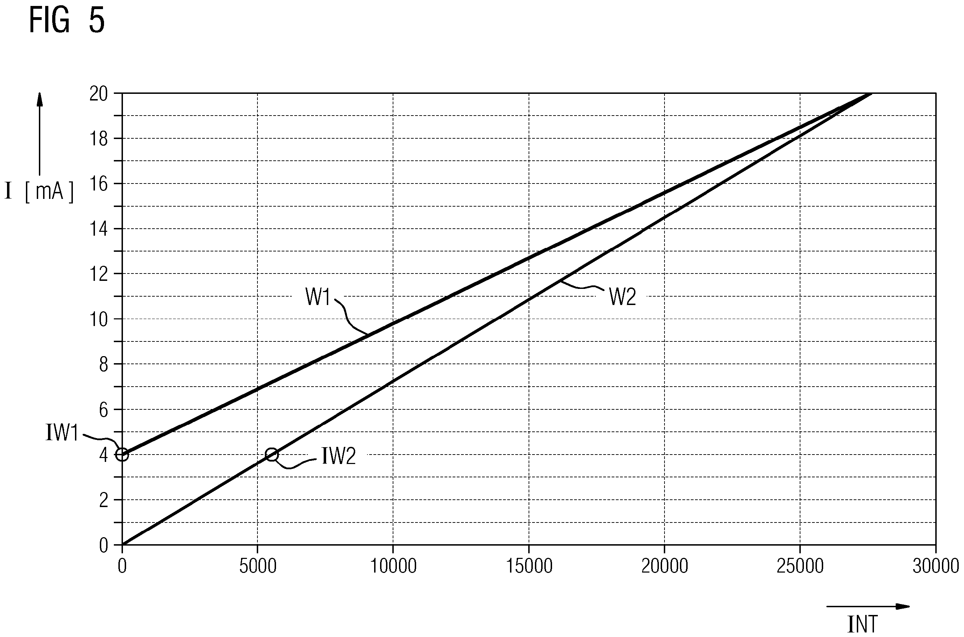

Die FIG 5 zeigt ein Diagramm von einer ersten Wandlerkurve W1 und einer zweiten Wandlerkurve W2. Die erste und zweite Wandlerkurve W1,W2 sind entsprechend dem ersten Erfassungsmittel 11 und dem zweiten Erfassungsmittel 12 zugeordnet. Die erste Wandlerkurve W1 ist für einen Analog-Digital-Wandler bei einem Wandler, welcher auf eine Parametrierung von 4 bis 20 mA ausgelegt ist dargestellt und die zweite Wandlerkurve W2 ist für eine Parametrierung von 0 bis 20 mA dargestellt. Die X-Achse zeigt Werte im Milliamperebereich und die Y-Achse zeigt die von den Analog-Digital-Wandlern bereitgestellten Integerwerte IW1,IW2. Diese grafische Darstellung der Kurvenverläufe liegt im Sicherheitsprogramm 19 bzw. im ersten Funktionsbaustein 21 als Erwartungswissen vor. Aufgrund der unterschiedlichen Parametrierung des ersten und zweiten Erfassungsmittels 11,12 ist es nun möglich, über den ersten Wert, z.B. dem ersten Integerwert IW1, eine Erwartungshaltung an dem zweiten Wert, z.B. zweiter Integerwert IW2, zu stellen.

Z.B. wird bei einer Messung eines Stromes von 4 mA für den ersten Integerwert IW1 und einer Parametrierung von 4 bis 20 mA den Wert 0 erzeugt. Und nun aufgrund dessen, dass im ersten Funktionsbaustein 21 bekannt ist, wie sich das zweite Erfassungsmittel 12 nun verhalten muss, kann eine Erwartungshaltung an den zweiten Integerwert IW2 gestellt werden. Der zweite Integerwert IW2 muss dann ca. im Bereich von 5530 liegen, ansonsten liegt ein Fehler vor, der von einem Kreuzvergleich aufgedeckt wird.

Folgende Diagnosen und Verfahren sind in den Funktions-Bausteinen implementiert:

**Kreuzvergleich**

Das redundante Einlesen der beiden Analogwerte ermöglicht es, die beiden Werte im Sicherheitsprogramm auf Gleichheit zu überprüfen. Dadurch lassen sich verschiedene Fehlermodelle aufdecken und beherrschen.

Laufen die beiden Werte zu weit auseinander (Einstellbar über den Eingangsparameter "tolerance") oder unterscheiden sich gar komplett, wird ein Error Bit gesetzt und die entsprechende Fehlerreaktion eingeleitet.

**Überwachung auf Stuck-At Fehler**

Das Sicherheitsprogramm speichert in jedem F-Zyklus den aktuellen Wert S-AI1n ab und vergleicht diesen im nächsten Zyklus mit dem dort aktuellen Wert S-AI1(n+1). Das gleiche wird mit dem Analogwert S-AI2 durchgeführt.

Bei Gleichheit der Analogwerte S-AI1n und S-AI1(n+1) innerhalb von zwei Zyklen, wird ein Timer gestartet. Innerhalb dieser Zeit ("FreezeTime") müssen sich die alten Werte von den aktuellen Werten unterscheiden. Ist dies nicht der Fall, wird die entsprechende Fehlerreaktion eingeleitet.

**Diversitäre Parametrierung der Baugruppen**

Auf Grund des redundanten Aufbaus ist es möglich, die beiden Analogbaugruppen unterschiedlich zueinander zu parametrieren. Es gibt zwei verschiedene Möglichkeiten die Parameter der Analogbaugruppen zu ändern.

Ändern der Parameter in der Hardwarekonfiguration

Bei Erstellen der Hardwarekonfiguration können der Baugruppe verschiedene Eigenschaften zugewiesen werden. Unter anderem ist es möglich, Diagnosen zu- oder abzuschalten, Glättungsfaktoren einzustellen oder die Messart festzulegen.

Änderung der Parameter zur Laufzeit (CiR = Configuration in Run)

Die zweite Möglichkeit besteht darin, die Baugruppen zur Laufzeit umzuparametrieren. Hierfür wird der Baustein "WRREC" verwendet, der den entsprechenden Datensatz zur Laufzeit auf die Baugruppe schreibt.

Im vorliegenden Anwendungsbeispiel werden beide Methoden der Umparametrierung verwendet.

Es ist somit möglich über den ersten Wert eine Erwartungshaltung an den zweiten Wert zu erstellen. Bei einer Messung eines Stromes von 4 mA auf Baugruppe 1 wird ein INT-Wert von 0 erzeugt. Auf Grund dessen, dass im Sicherheitsprogramm bekannt ist, wie sich Baugruppe 2 nun verhalten muss, kann eine Erwartungshaltung an den Wert gestellt werden. Es muss ein Wert von ca. 5530 ankommen, ansonsten liegt ein Fehler vor der vom Kreuzvergleich aufgedeckt wird.

**Grenzwertüberwachung**

Mit Hilfe einer Minimum- und Maximumgrenze können Sie sehr einfach Prozessgrenzwerte definieren, bei deren Überschreitung ein gefährlicher Zustand erreicht werden kann. Hierfür werden die parametrierten Grenzwerte mit den aktuellen Prozesswerten abgeglichen und bei einer Unter- bzw. Überschreitung ein entsprechendes Bit im Diagnosewort, sowie das Error Bit gesetzt.

**QBAD - Überwachung**

Das QBAD-Signal ist im Peripheriedatenbaustein der verwendeten F-Baugruppe zu finden und am Baustein ordnungsgemäß zu verschalten. Durch die Verwendung einer F-Baugruppe und des QBAD-Signals werden PROFIsafe-Maßnahmen mitgenutzt, die wesentliche Vorteile mit sich bringen.
Die F-Baugruppe gibt ihre Prozessdaten in einem PROFIsafe Paket über den Rückwandbus an das Interfacemodul der ET200SP weiter. Würden systematische Fehler, wie Überspannungen oder ähnliches Daten am Rückwandbus verfälschen, so würde ebenfalls das PROFIsafe Paket verfälscht werden. Aufgrund der systembedingten Mechanismen werden solche Verfälschungen zuverlässig von der F-CPU aufgedeckt. Fehler am Rückwandbus können also mithilfe der F-Baugruppe beherrscht werden.

**Zyklische Umparametrierung**

Das zyklische Umparametrieren der zweiten Baugruppe ist ein wesentlicher Bestandteil des Sicherheitskonzeptes. Hierbei wird in einem vorgegebenen Zyklus eine der beiden Baugruppen umparametriert.
Die Häufigkeit dieser Maßnahme lässt sich nach DIN EN 61508-2 Punkt 7.4.4.1.5 bestimmen.
Hier wird erläutert, dass die Diagnose nur dann auf den Anteil sicherer Ausfälle angerechnet werden kann, wenn die Summe des Diagnosetestintervalls und der Reparaturdauer geringer ist, als die angenommene MTTR. Hieraus lässt sich folgendes schließen:

Nach DIN EN 61508-4 ergibt sich die MTTR (*"mean time to restoration"*) aus folgenden Punkten:

- Dauer bis zum Erkennen des Ausfalls,
- Dauer bis zum Beginn der Wiederherstellung,
- Tatsächliche Reparaturdauer,
- Dauer bis das Bauteil in Betrieb genommen wird.

Die MTTR wird in unserem Fall auf 8 Stunden festgelegt. Das bedeutet, dass innerhalb dieser 8 Stunden der Fehler erkannt und behoben werden muss. Eine Reparatur der Analogbaugruppen ist aufgrund derer Komplexität nicht ohne weiteres möglich, weshalb auf eine Austauschbaugruppe zurückgegriffen werden muss.
Die eigentliche Reparaturdauer ist somit sehr gering, da der Austausch der Baugruppe i.d.R. nur wenige Minuten dauert.
Da nach DIN EN 61508 - 2 Punkt 7.4.4.1.5 gilt:

$$\text{Diagnose-Testintervall + Reparaturzeit} < \text{MTTR}$$

MTTR = 8 Stunden
Reparaturzeit: << 1Std (Austausch der Baugruppe)

Für das Diagnose-Testintervall stehen theoretisch min. 7 Stunden. zur Verfügung. Auf Grund eines konservativen Ansatzes wird das Intervall dieser Diagnose auf 15 min festgelegt.

**Coded Processing**

Alle sicherheitsrelevanten Aufgaben werden im Sicherheitsprogramm der CPU abgearbeitet. Die verwendeten Steuerungen sind zertifiziert und können SIL 3 bzw. PL e erreichen. Die Zertifikate sind online einzusehen.

**Wertstatus der S-AI**

Der Wertstatus der Baugruppe sollte wie beschrieben ausgewertet und verschalten werden.

Folgendes muss zusätzlich beachtet werden und ist nicht im Baustein enthalten:

**Durchlaufen des gesamten Messbereichs**

Um verschiedene Fehlermodelle ausschließen zu können, ist es nötig, in einem definierten Intervall zu überprüfen, ob die AD-Wandler der Analogbaugruppen noch korrekt arbeiten.

Eine Festlegung des Testintervalls obliegt dem Anwender. Dieser hat nach verschiedenen Kriterien zu entscheiden, wie oft er die Prüfung durchzuführen hat.

- Wie oft wird der Messbereich im Regelbetrieb durchlaufen?
- Wie hoch sind die MTBF-Werte der verwendeten Baugruppen / Sensoren?
- Können Stuck-At Fehler ausgeschlossen werden (regelmäßiger Baugruppentausch o.ä.)?

Als unterer Grenzwert wird eine Dauer von einem Jahr festgelegt. Es muss also mindestens 1x pro Jahr der gesamte Messbereich durchlaufen und zwingend die obere und untere Grenze geprüft werden.

Im Rahmen dieser Maßnahme müssen zeitgleich die Baugruppen auf einen eventuell vorhandenen Drift untersucht werden. Hierzu ist es beispielsweise möglich, den gemessenen Wert durch einen real bekannten Wert zu verifizieren und eine

(dann evtl. notwendige) Kalibrierung der Baugruppe durchzuführen.

**Patentansprüche**

1. Verfahren zum fehlersicheren Erfassen eines Messwertes (AO) in einer Steuereinheit (10), wobei der Messwert (AO) zum einen mit einem ersten Erfassungsmittel (11) und zum anderen mit einem zweiten Erfassungsmittel (12) erfasst wird und dadurch ein erster Messwert (AI1) und ein zweiter Messwert (AI2) zur Verfügung gestellt wird,

   wobei in einem Vergleichsschritt in einem in der Steuereinheit (10) ablaufenden Sicherheitsprogramm (19) der erste und der zweite Messwert (AI1,AI2) miteinander auf eine Abweichung voneinander verglichen werden und bei Erreichen oder Überschreitung einer vorgebenden maximalen Abweichung (minV,maxV) ein Fehler erkannt wird,

   **dadurch gekennzeichnet, dass** das erste Erfassungsmittel (11) für einen ersten einzustellenden Messbereich (M1) mit fester Parametrierung von 0 bis 20 mA parametriert wird, dass das zweite Erfassungsmittel (12) für einen zweiten einzustellenden Messbereich (M2) mit wechselnder Parametrierung von 0 bis 20 mA und von 4 bis 20 mA parametriert wird, dass der zweite einzustellende Messbereich (M2) für das zweite Erfassungsmittel (12) wechselweise umparametriert wird, wobei ein Startsignal (S) als ein Trigger funktioniert und jedes Mal wenn das Startsignal anliegt, der jeweils gültige Parametersatz in dem zweiten Erfassungsmittel (12) auf den anderen Parametersatz wechselseitig umparametriert wird, dass im Sicherheitsprogramm (19) eine Plausibilitätskontrolle zwischen dem ersten Messwert (AI1) und dem zweiten Messwert (AI2) dadurch durchgeführt wird, dass in den Erfassungsmitteln (11,12) Analog-Digital-Wandler eingesetzt werden und der Analog-Digital-Wandler in dem ersten Erfassungsmittel (11) für den ersten Messwert (AI1) einen ersten Integerwert (IW1) und der Analog-Digital-Wandler in dem zweiten Erfassungsmittel 12() für den zweiten Messwert (AI2) einen zweiten Integerwert (IW2) bereitstellt, auf welche die Plausibilitätskontrolle angewendet wird, wobei im Sicherheitsprogramm (1) eine erste Wandlerkurve (W1), welche für einen Analog-Digital-Wandler mit einer Parametrierung von 4 bis 20 mA ausgelegt ist, und eine zweite Wandlerkurve (W2), welche für einen Analog-Digital-Wandler mit einer Parametrierung von 0 bis 20 mA ausgelegt ist, liegen, und dass bei einem negativen Plausibilitätskontrollergebnis ebenfalls ein Fehler erkannt wird.

2. Verfahren nach Anspruch 1, wobei in dem Sicherheitsprogramm (19) der Steuereinheit (10)

   - die Plausibilitätskontrolle in einem ersten Funktionsbaustein (21) und
   - das Umparametrieren des zweiten Erfassungsmittels (12) in einem zweiten Funktionsbaustein (22)

   durchgeführt wird, dabei werden dem ersten Funktionsbaustein (21) als Eingangswerte der erste und zweite Messwert (AI1,AI2) übergeben und als Ausgangswerte wird zum einen der fehlersichere Messwert (AO) bereitgestellt und zum anderen wird ein Startsignal (S) für das Umparametrieren bereitgestellt, wobei das Startsignal (S) dem zweiten Funktionsbaustein (22) als Eingangswert bereitgestellt wird, welcher daraufhin das Umparametrieren veranlasst und nach erfolgreicher Umparametrierung der zweite Funktionsbaustein (22) ein Rückmeldesignal (CD) bereitstellt, welches wiederrum als Eingangswert auf den ersten Funktionsbaustein (21) geschaltet wird.

3. Verfahren nach Anspruch 2, wobei im ersten Funktionsbaustein (21) zusätzlich überwacht wird, ob sich zumindest ein Messwert in einem vorgegebenen Zeitfenster ändert, falls keine Änderung erfolgt wird ebenfalls ein Fehler erkannt.

4. Automatisierungssystem (100) ausgestaltet zum fehlersicheren Erfassen eines Messwertes (AO) umfassend:

   - eine Steuereinheit (10),
   - ein erstes Erfassungsmittel (11) mit einem ersten Analog-Digital-Wandler, welches ausgestaltet ist einen ersten Messwert (AI1) zu erfassen,
   - ein zweites Erfassungsmittel (12) mit einem zweiten Analog-Digital-Wandler, welches ausgestaltet ist einen zweiten Messwert (AI2) zu erfassen, und
   - ein in der Steuereinheit (10) ablaufendes Sicherheitsprogramm (19), welches ausgestaltet ist, das Verfahren nach einem der Ansprüche 1 bis 3 durchzuführen.

5. Automatisierungssystem (100) nach Anspruch 4, wobei das Sicherheitsprogramm (19) der Steuereinheit (10) einen ersten Funktionsbaustein (21), welcher ausgestaltet ist, die Plausibilitätskontrolle durchzuführen und einem zweiten Funktionsbaustein (22) aufweist, welcher ausgestaltet ist, das Umparametrieren des zweiten Erfassungsmittels (12) durchzuführen.

6. Automatisierungssystem (100) nach einem der Ansprüche 4 bis 5, wobei

   die Steuereinheit (10) als eine auf funktionale Sicherheit ausgelegte industrielle Automatisierungssteuerung ausgestaltet ist, und wobei
   das erste Erfassungsmittel (11) und das zweite erstes Erfassungsmittel (12) jeweils als eine industrielle Analog-Baugruppe ausgestaltet sind.

7. Automatisierungssystem (100) nach Anspruch 6, wobei zusätzlich eine auf funktionale Sicherheit ausgelegte industrielle Baugruppe an einen Rückwandbus angeschaltet ist, an dem auch die industriellen Analog-Baugruppen angeschaltet sind, wobei dadurch eine Überwachung des Rückwandbusses realisiert ist, wobei die auf funktionale Sicherheit ausgelegte industrielle Baugruppe ausgestaltet ist ein Qualitätssignal (QBAD) zu generieren, welches Rückschlüsse zu Fehlern am Rückwandbus zulässt.

**Claims**

1. Method for the error-protected acquisition of a measured value (AO) in a control unit (10), wherein the measured value (AO) is firstly acquired with a first acquisition means (11) and secondly with a second acquisition means (12) and thereby a first measured value (AI1) and a second measured value (AI2) are made available,

   wherein in a comparison step in a safety program (19) running in the control unit (10), the first and the second measured value (AI1, AI2) are compared with one another for a deviation from one another and on reaching or exceeding a pre-determined maximum deviation (minV, maxV), an error is identified,
   **characterised in that**
   the first acquisition means (11) is parameterised for a first measurement range (M1) that is to be set with fixed parameterisation from 0 to 20 mA, that
   the second acquisition means (12) is parameterised for a second measurement range (M2) that is to be set with alternating parameterisation from 0 to 20 mA and from 4 to 20 mA,
   that the second measurement range (M2) for the second acquisition means (12) is alternatingly reparameterised, wherein a start signal (S) functions as a trigger and each time the start signal is applied, the respectively valid parameter set in the second acquisition means (12) is reparameterised to the other parameter set on an alternating basis, that a plausibility check between the first measured value (AI1) and the second measured value (AI2) is carried out in the safety program (19), such that analogue-digital converters are utilised in the acquisition means (11, 12) and the analogue-digital converter in the first acquisition means (11) provides a first integer value (IW1) for the first measured value (AI1) and the analogue-digital converter in the second acquisition means (12) provides a second integer value (IW2) for the second measured value (AI2), to which the plausibility check is applied, wherein the safety program (1) contains a first converter curve (W1), which is configured for an analogue-digital converter with a parameterisation from 4 to 20 mA, and a second converter curve (W2), which is configured for an analogue-digital converter with a parameterisation from 0 to 20 mA, and that if a plausibility check result is negative, an error is also identified.

2. Method according to claim 1, wherein in the safety program (19) of the control unit (10)

- the plausibility check is carried out in a first functional component (21) and
- the reparameterisation of the second acquisition means (12) is carried out in a second functional component (22),

the first and second measured values (AI1, AI2) are transferred to the first functional component (21) as input values and, as output values, firstly the error-protected measured value (AO) is provided and secondly a start signal (S) is provided for the reparameterisation, wherein the start signal (S) is provided as an input value to the second functional component (22), which thereupon initiates the reparameterisation and following successful reparameterisation, the second functional component (22) provides a feedback signal (CD), which signal is then switched to the first functional component (21) as an input value.

3. Method according to claim 2, wherein in the first functional component (21), it is additionally monitored whether at least one measured value changes in a pre-determined time window and, if no change occurs, an error is also identified.

4. Automation system (100) configured for the error-protected acquisition of a measured value (AO), comprising:

- a control unit (10),
- a first acquisition means (11) with a first analogue-digital converter, which is configured to acquire a first measured value (AI1),
- a second acquisition means (12) with a second analogue-digital converter, which is configured to acquire a second measured value (AI2), and
- a safety program (19) running in the control unit (10) which is configured to carry out the method according to one of claims 1 to 3.

5. Automation system (100) according to claim 4, wherein the safety program (19) of the control unit (10) comprises a first functional component (21) which is configured to carry out the plausibility check and a second functional component (22) which is configured to carry out the reparameterisation of the second acquisition means (12).

6. Automation system (100) according to one of claims 4 to 5, wherein
the control unit (10) is designed as an industrial automation control system configured for functional safety, and wherein the first acquisition means (11) and the second acquisition means (12) are respectively configured as an industrial analogue assembly.

7. Automation system (100) according to claim 6, wherein additionally an industrial assembly configured for functional safety is connected to a backplane bus to which the industrial analogue assemblies are also connected, wherein thereby monitoring of the backplane bus is realised, wherein the industrial assembly designed for functional safety is configured to generate a quality signal (QBAD) which permits conclusions to be drawn regarding errors at the backplane bus.

**Revendications**

1. Procédé de détection d'une manière protégée vis-à-vis d'une erreur d'une valeur (AO) de mesure dans une unité (10) de commande, dans lequel on détecte la valeur (AO) de mesure d'une part par un premier moyen (11) de détection et d'autre part par un deuxième moyen (12) de détection, et on dispose ainsi d'une première valeur (AI1) et d'une deuxième valeur (AI2),

dans lequel, dans un stade de comparaison, dans un programme (19) de sécurité se déroulant dans l'unité (10) de commande, on compare l'une à l'autre la première et la deuxième valeurs (AI1, AI2) de mesure entre elles, pour savoir si elles s'écartent l'une de l'autre et, si un écart (minV, maxV) maximum donné à l'avance est atteint ou dépassé, on reconnaît une erreur,

**caractérisé en ce que**

on paramétrise le premier moyen (11) de détection pour une première plage (M1) de mesure à régler par un paramétrage fixe de 0 à 20 mA, **en ce que**

on paramétrise le deuxième moyen (12) de détection pour une deuxième plage (M2) de mesure à régler par un paramétrage alterné de 0 à 20 mA et de 4 à 20 mA,

**en ce que** l'on change le paramétrage en alternance de la deuxième plage (M2) de mesure à régler pour le deuxième moyen (12) de détection, dans lequel un signal (S) de début fonctionne comme déclencheur et chaque fois que le signal de début s'applique, l'ensemble de paramètres valable respectivement dans le deuxième moyen (12) de détection est changé réciproquement en l'autre ensemble de paramètres, **en ce que** l'on effectue dans le programme (19) de sécurité, un contrôle de vraisemblance entre la première valeur (AI1) de mesure et la deuxième valeur (AI2) de mesure en utilisant, dans les moyens (11, 12) de détection, des convertisseurs analogiques - numériques et le convertisseur analogique -numérique dans le premier moyen (11) de détection met à disposition, pour la première valeur (AI1) de mesure, une première valeur (IW1) en nombre entier et le convertisseur analogique - numérique dans le deuxième moyen (12) de détection met à disposition, pour la deuxième valeur (AI2) de mesure, une deuxième valeur (IW2) en nombre entier, sur lesquelles on applique le contrôle de vraisemblance, dans lequel, dans le programme (1) de sécurité, il y a une première courbe (W1) de convertisseur, qui est conçue pour un convertisseur analogique - numérique ayant un paramétrage de 4 à 20 mA, et une deuxième courbe (W2) de convertisseur, qui est conçue pour un convertisseur analogique - numérique ayant un paramétrage de 0 à 20 mA, et **en ce que** on détecte également une erreur, si le résultat du contrôle de la vraisemblance est négatif.

**2.** Procédé suivant la revendication 1, dans lequel, dans le programme (19) de sécurité de l'unité (10) de commande, on effectue

- le contrôle de vraisemblance dans un premier module (21) fonctionnel et
- le changement de paramétrage du deuxième moyen (12) de détection dans un deuxième module (22) fonctionnel,

dans lequel on transmet au premier module (21) fonctionnel, comme valeur d'entrée, la première et la deuxième valeurs (AI1, AI2) et on met à disposition, comme valeur de sortie, d'une part la valeur (AO) de mesure, de manière protégée vis-à-vis d'une erreur et, d'autre part un signal (S) de début pour le changement de paramétrage, dans lequel on met le signal (S) de début à disposition du deuxième module (22) fonctionnel comme valeur d'entrée, qui provoque ainsi le changement de paramétrage et, après que le changement de paramétrage a été couronné de succès, le deuxième module (22) fonctionnel met à disposition un signal (CD) d'accusé de réception, que l'on applique à nouveau comme valeur d'entrée au premier module (21) fonctionnel.

**3.** Procédé suivant la revendication 2, dans lequel on contrôle en outre, dans le premier module (21) fonctionnel, si au moins une valeur de mesure varie dans un créneau temporel donné à l'avance, si aucune variation n'a lieu, on reconnaît également une erreur.

**4.** Système (100) d'automatisation conformé pour la détection d'une manière protégée vis-à-vis d'une erreur d'une valeur (AO) de mesure comprenant :

- une unité (10) de commande,
- un premier moyen (11) de détection ayant un premier convertisseur analogique - numérique, qui est conformé pour détecter une première valeur (AI1) de mesure,
- un deuxième moyen (12) de détection ayant un deuxième convertisseur analogique - numérique, qui est conformé pour détecter une deuxième valeur (AI2) de mesure, et
- un programme (19) de sécurité, qui se déroule dans l'unité (10) de commande et qui est conformé pour effectuer le procédé suivant l'une des revendications 1 à 3.

**5.** Système (100) d'automatisation suivant la revendication 4, dans lequel le programme (19) de sécurité de l'unité (10) de commande a un premier module (21) fonctionnel, qui est conformé pour effectuer le contrôle de vraisemblance, et un deuxième module (22) fonctionnel, qui est conformé pour effectuer le changement de paramétrage du deuxième moyen (12) de détection.

6. Système (100) d'automatisation suivant l'une des revendications 4 à 5, dans lequel

l'unité (10) de commande est conformée en une commande d'automatisation industrielle conçue pour une sécurité fonctionnelle, et dans lequel
le premier moyen (11) de détection et le deuxième moyen (12) de détection sont conformés chacun sous la forme d'un module analogique industriel.

7. Système (100) d'automatisation suivant la revendication 6, dans lequel en outre un module industriel, conçu en vue d'une sécurité fonctionnelle, est raccordé à un bus de fond de panier, auquel les modules analogiques industriels sont également raccordés, dans lequel ainsi un contrôle du bus de fond de panier est réalisé, dans lequel le module industriel, conçu en vue de la sécurité fonctionnelle, est conformé pour produire un signal (QBAD) de qualité, qui permet de tirer des conclusions sur des erreurs sur le bus de fond de panier.

## FIG 1

FIG 2

FIG 3

#instFAnalogIn"

%FB3
"fAnalogIn"

... --- EN

AI1 →

%IW3
"AnalogIn1" --- analogIn1

AI2 →

%IW8
"AnalogIn2" --- analogIn2

20 --- minValue

150 --- maxValue

0 --- minScale

200 --- maxScale

10 --- tolerance

%I17.0
"AnalogIn1VS" --- analogIn1VS

%I22.0
"AnalogIn2VS" --- analogIn2VS

"F00008_F-
DQ4x24VDC/
2APMHF_1".
QBAD --- qbad

true --- subAnalogOut

subAnalogOutE
1111 --- n

enableParaCha                    analogOut --- #tempAnalogOut → AO
true --- nge
                              startChangeTo                      S →
"DataToSafety".                  Default --- "DataFromSafety"
DefaultDone --- defaultDone                  startChange

"DataToSafety".                            "DataFromSafety"
changeDone --- changeDone      startChange --- .startChangeToD
false --- valueOut           paraChangeAct   efault

timeForParaCh                    ive --- ...
T#2s --- ange                     error --- #tempError
T#1S --- freezeTime               diag --- #tempDiag
false --- ack                      ENO ---

CD

21

# FIG 4

22

%DB2
"sAnalogIn_DB"

%FB2
"sAnalogIn"

... --- EN

266
"IO-Device_
1-AI_2xU_I_2-
_4-wire_HS_
1_1" --- HW_ID

S

"DataFromSafety"
.startChange --- startChange

"DataFromSafety"
.startDefault --- startDefault

P2(M2)    "Records"
recordDefault --- record_4_20mA

P1(M1)    "Records"
recordChange --- record_0_20mA

defaultDone --- "DataToSafety"
defaultDone

changeDone --- "DataToSafety"
changeDone

ENO ---

CD

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005109132 A1
- DE 10235502 C1

- US 2013197849 A1